(19) Europäisches Patentamt

European Patent Office

Office européen des brevets

(11) **EP 3 151 190 A1**

(12) **EUROPEAN PATENT APPLICATION**

(43) Date of publication:
**05.04.2017 Bulletin 2017/14**

(51) Int Cl.:
**G06T 5/50** *(2006.01)*  **G06T 7/00** *(2017.01)*
**G06K 9/20** *(2006.01)*

(21) Application number: **15306547.9**

(22) Date of filing: **30.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
- **HUDON, Matis**
  **35576 Cesson-Sévigné (FR)**
- **ROBERT, Philippe**
  **35576 Cesson-Sévigné (FR)**
- **KERBIRIOU, Paul**
  **35576 Cesson-Sévigné (FR)**

(74) Representative: **Huchet, Anne**
**TECHNICOLOR**
**1-5, rue Jeanne d'Arc**
**92130 Issy-les-Moulineaux (FR)**

(54) **METHOD, APPARATUS AND SYSTEM FOR DETERMINING NORMAL AND REFLECTANCE PARAMETERS USING SEQUENTIAL ILLUMINATION**

(57) A method, apparatus and system for the determination of normal and reflectance parameters using sequential illumination and recorded depth information include illuminating a scene using a light source such that every other frame of the scene recorded by a camera is illuminated by the multiplexed light source. Depth data of the scene is recorded concurrent with the recording of the scene by the camera. A light source contribution image for the scene is determined using a difference between recorded images containing the light source illumination and recorded images not containing the multiplexed light source illumination. Finally, the normal and reflectance parameters are determined using the recorded depth information and the light source contribution image.

FIG. 3

**Description**

## TECHNICAL FIELD

The present principles relate generally to scene evaluation and characterization and, more particularly, to a method, apparatus and system for determining normal and reflectance parameters of a scene using sequential illumination.

## BACKGROUND

There currently exist several solutions for acquiring a video sequence of a scene, while evaluating the geometry (shape and normal) and diffuse reflectance of objects. One such solution includes retrieving a shape of an object in an image from gradual variation of the shading in an image, using a Lambertian model of reflection. This method uses a single image to retrieve the shape of the objects in the image. Therefore only a camera is needed for the acquisition.

In other solutions, Markov Random Fields are used to fuse data from a low resolution depth scanner and a high resolution color camera and in yet other depth filtering and upsampling techniques are proposed for RGBZ videos, but take no advantage of shading in their framework.

In addition, efficient algorithms exist for combining depth and normals taking advantage of each to create the best surface possible for computer graphics and a real time method was proposed to solve the inverse rendering problem using an effective parametrization of the shading equation. Such method enables the refinement of a depth map captured by consumer depth camera for lambertian scenes with a time varying uncontrolled illumination. Those methods require both a depth sensor and a RGB camera however there is no control of the illumination of a scene.

More recently, photometric solutions have been proposed. Such solutions use colored light to perform photometric stereo for non-rigid objects of unknown and spatially varying materials. Colored lights are used to avoid the loss of frame rate when performing photometric stereo. One such solution comprises a complex light stage system that achieves good results but can't be incorporated in most traditional filming/recording scenarios. That is, although solutions based on illumination setups achieve much higher quality results than other methods previously presented, such solutions cannot be implemented during classical movie acquisition.

## SUMMARY OF THE INVENTION

These and other drawbacks and disadvantages of the prior art are addressed by the present principles, which are directed at a method, apparatus and system for the determination of normal and reflectance parameters using sequential illumination and depth information.

In one embodiment of the present principles a scene is illuminated using a multiplexed light source such that every other frame of the scene recorded by a camera is illuminated by the multiplexed light source. The depth data of the scene is recorded concurrent with the recording of the scene by the camera and a light source contribution image is determined for the scene by determining a difference between recorded images containing the multiplexed light source illumination and recorded images not containing the multiplexed light source illumination. The normal and reflectance parameters are determined using the recorded depth information and the light source contribution image.

In one embodiment of the present principles the normal and reflectance parameters are determined by deriving a rough normal map using the recorded depth information and information derived from the light source contribution image, filtering the rough normal map using weighting based on luminance values derived from the light source contribution image, determining a reflectance map using the filtered normal map, filtering the reflectance map using weighting based on chromaticity values derived from the light source contribution image and refining the filtered, rough normal map using information in the filtered reflectance map. Such embodiments can further include filtering the refined, filtered, rough normal map to determine a newly filtered normal map, determining a new reflectance map using the newly filtered normal map, filtering the new reflectance map using weighting based on chrominance values derived from the light source contribution image and performing a subsequent refining of the refined normal map using information in the filtered, refined reflectance map. Such process can be repeated until a convergence between the reflectance map (diffuse coefficients) and the normal map converge.

In an alternate embodiment of the present principles, an apparatus for determining normal and reflectance parameters using sequential illumination includes a memory adapted to store control programs, instructions, software, video content, data and the like and a processor adapted to execute the control programs and instructions. In this embodiment, the processor, when executing the control programs, causes the apparatus to determine a light source contribution image for a scene by determining a difference between recorded images containing a light source illumination and recorded images not containing the light source illumination and determine normal and reflectance parameters using recorded depth information of a scene and the light source contribution image. To determine the normal and reflectance parameters the apparatus derives a rough normal map using the recorded depth information and information derived from the light source contribution image, filters the rough normal map using weighting based on luminance values derived from the light source contribution image, determines a reflectance map using the filtered normal map, filters the reflectance map using weighting based on chromaticity values derived from the light source contribution image and refine the filtered, rough normal map using information in the filtered reflectance map. Such embodiments can further include filtering the refined, filtered, rough normal map to determine a newly filtered normal map, determining a new reflectance map using the newly filtered normal map, filtering the new reflectance map using weighting based on chrominance values derived from the light source contribution image and performing a subsequent refining of the refined normal map using information in the filtered, refined reflectance map. Such process can be repeated until a convergence between the reflectance map (diffuse coefficients) and the normal map converge.

In an alternate embodiment of the present principles, a system for determining normal and reflectance parameters using sequential illumination includes a light source adapted to illuminate a scene such that every other frame of the scene recorded by a camera is illuminated by the light source, a depth sensor adapted to record depth data of the scene concurrent with the recording of the scene by the camera, a processing device including a memory adapted to store control programs, instructions, software, video content, data and the like and a processor adapted to execute the control programs and instructions. When the processor executes the control programs, the apparatus is adapted to determine a light source contribution image for the scene by determining a difference between recorded images containing the light source illumination and recorded images not containing the light source illumination and determining normal and reflectance parameters using the recorded depth information and the light source contribution image. In various embodiments the system can further include a synchronizer adapted to use pulses from the camera to trigger the illumination by the light source. The synchronizer can further be adapted to synchronize the recording of the depth sensor with the recording of the camera.

## BRIEF DESCRIPTION OF THE DRAWINGS

The teachings of the present invention can be readily understood by considering the following detailed description in conjunction with the accompanying drawings, in which:

FIG. 1 depicts a high level block diagram of a system for the acquisition of normal and reflectance parameters using sequential illumination in accordance with an embodiment of the present principles;
FIG. 2 depicts a high level block diagram of a processing device in accordance with an embodiment of the present principles;
FIG. 3 depicts a graphical representation of the lighting sequences extracted from the frames captured by the camera of FIG. 1 in accordance with an embodiment of the present principles;
FIG. 4 depicts a graphical representation of the convergence of curves of normal and diffuse coefficients over each iteration of the process of the present principles in accordance with an embodiment of the present principles;
FIG. 5 depicts a flow diagram of a method for determining normal and reflectance parameters using sequential illumination and depth information in accordance with an embodiment of the present principles; and
FIG. 6 depicts a graphical flow diagram a method for determining normal and reflectance parameters using sequential illumination and depth information including an iterative process in accordance with an embodiment of the present principles.

To facilitate understanding, identical reference numerals have been used, where possible, to designate identical elements that are common to the figures. The drawings are not to scale, and one or more features may be expanded or reduced for clarity.

## DETAILED DESCRIPTION

Embodiments of the present principles advantageously provide a method, an apparatus and a system for the determination of normal and reflectance parameters using sequential illumination and depth information for, for example, determining geometry of objects in a scene. Although the present principles will be described primarily within the context of movie/content acquisition and a recording environment, the specific embodiments of the present principles should not be treated as limiting the scope of the invention. It will be appreciated by those skilled in the art and informed by the teachings of the present principles that the concepts of the present principles can be advantageously applied in any environment for acquiring normal and reflectance parameters using sequential illumination in accordance with embodiments of the present principles.

Embodiments of the present principles are directed to the recording of content such as a movie sequence while simultaneously acquiring shading information. In one embodiment of the present principles, a scene is recorded with a camera frame rate twice higher than the desired movie frame rate, while using a light source, such as in one embodiment, time multiplexed illumination, which consists of a flash illumination having a frame rate of one frame over two. For these frames, the flash illumination of the present principles is added to the lighting already present in the scene. Subsequently, two sequences are extracted; one with the ambient lighting and the other with the additional flash illumination. Because light is additive, the contribution of the flash (light source) can be recovered by determining a difference between flashed images and non-flashed images. The flash contribution of the present principles enables the use of a simpler albedo-based algorithm to refine the geometry captured by a depth sensor. Using a time multiplexed illumination in accordance with the present principles provides shading information while substantially preserving the classical recording environment.

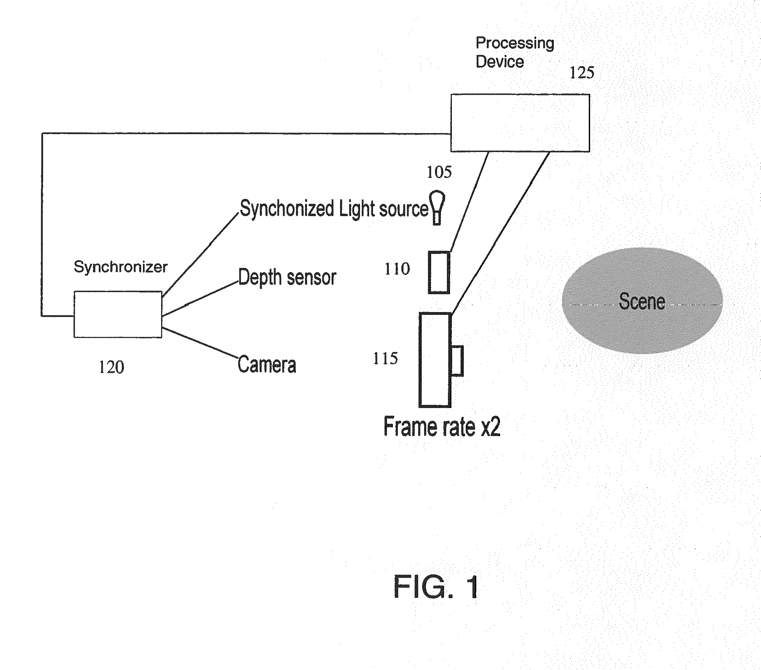

FIG. 1 depicts a high level block diagram of a system for the acquisition of normal and reflectance parameters using sequential illumination and depth information in accordance with an embodiment of the present principles. The system 100 of FIG. 1 illustratively comprises a light source 105, in this embodiment a multiplexed light source, a depth sensor 110, a camera 115, a synchronizer 120 and a processing device 125. Although in the embodiment of FIG. 1 the camera 115 is depicted as a separate device, in alternate embodiments of the present principles the camera can be incorporated into the depth sensor 110. For example, in an alternate embodiment of the present principles, the depth sensor 110 can include an internally synchronized RGB camera from which synchronization pulses can be extracted (described in further detail below) and for which the frame rate can be multiplied by two or half the frames can be lost.

In the system of the embodiment of FIG. 1, the light source 105 illuminates every other frame of the frames captured by the camera 115. That is, in the embodiment of FIG. 1, the frame rate of the camera 115 is multiplied by two during acquisition. As a result, two lighting sequences can be extracted from the frames captured by the camera; a first light sequence containing flash illumination provided by the light source 105 and an ambient light sequence containing ambient lighting of the scene being recorded. The depth sensor 110 of FIG. 1 records depth data of the scene concurrent with the recording of the scene by the camera 115. In one embodiment of the present principles, the synchronizer 120 uses pulses from the camera 115 to trigger the flash illumination by the light source 105. The depth sensor 110 can also be synchronized directly with the camera, however does not have to be. That is, some consumer depth sensors cannot be synchronized with the camera, but as the frame rate of the depth sensor is lower than the frame rate of the camera 115, in such embodiments of the present principles, depth data is extracted from the closest frame to the image of the camera.

The data/information recorded by the depth sensor 110 and the camera 115 are communicated to the processing device 125 for implementing the features of the present principles in accordance with the described embodiments of the present principles. In alternate embodiments of the present principles, data from the synchronizer 120 and the light source 105 are also communicated to the processing device 125 to assist in the implementation of the features of the present principles in accordance with the described embodiments of the present principles.

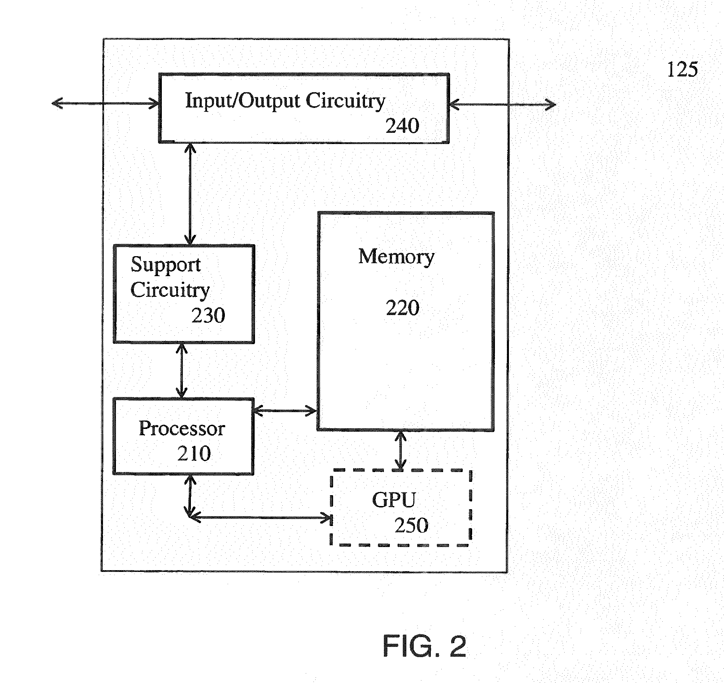

FIG. 2 depicts a high level block diagram of a processing device 125 for implementing the features of the present principles in accordance with an embodiment of the present principles. The processing device 125 of FIG. 2 comprises a processor 210 as well as a memory 220 for storing control programs, instructions, software, video content, data and the like. The processor 210 cooperates with conventional support circuitry 230 such as power supplies, clock circuits, cache memory and the like as well as circuits that assist in executing the control programs and/or software routines stored in the memory 220. As such, it is contemplated that some of the process steps discussed herein as software processes may be implemented within hardware, for example, as circuitry that cooperates with the processor 210 to perform various steps. The processing device 125 of FIG. 2 also includes input-output circuitry 240 that forms an interface between the various respective functional elements communicating with the processing device 125, In alternate embodiment of the present invention, the processing device 125 can further include a GPU (Graphical Processor Unit) 250 to increase performance.

Although the processing device 125of FIG. 2 is depicted as a general purpose computer that is programmed to perform various control functions in accordance with the present principles, the invention can be implemented in hardware, for example, as an application specified integrated circuit (ASIC). As such, the process steps described herein are intended to be broadly interpreted as being equivalently performed by software, hardware, or a combination thereof.

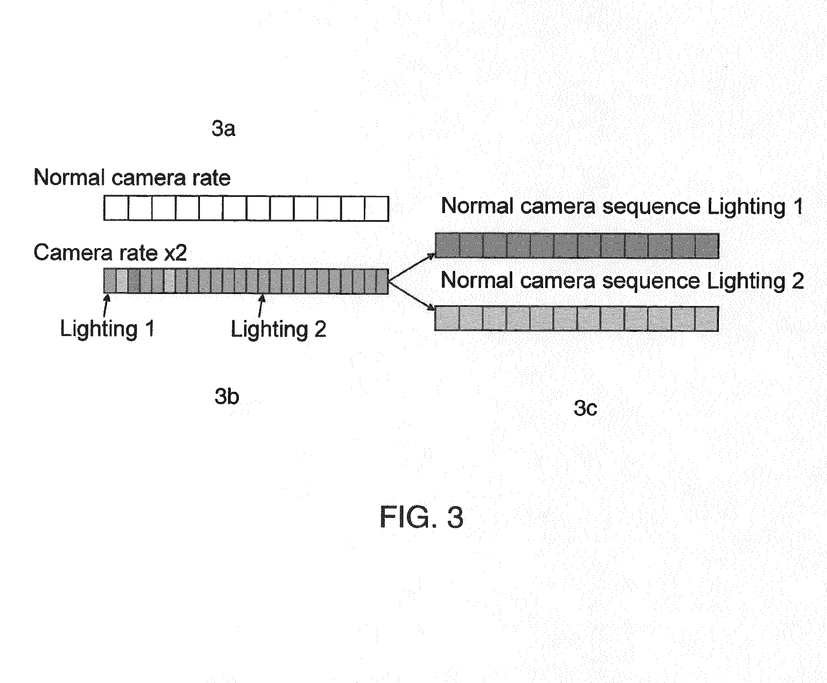

FIG. 3 depicts a graphical representation of the lighting sequences extracted from the frames captured by the camera 115 of FIG. 1 in accordance with an embodiment of the present principles. As depicted in FIG. 3, FIG. 3a depicts a graphical representation of frames captured by the camera 115 at a normal capture rate of the camera. FIG. 3b depicts a graphical representation of the frames captured by the camera 115 at double the frame rate in which the scene captured by the camera 115 is illuminated during every other frame by the multiplexed light source 105 and the remaining frames are illuminated by ambient light of the scene. As depicted in FIG. 3c, the two lighting sequences that can be extracted from the frames captured by the camera 115 include a multiplexed light sequence containing flash lighting from the multiplexed light source 105 and a sequence including frames captured by the camera 115 which include ambient lighting of the scene.

The captured multiplexed light source image can then be used along with information captured by the depth sensor 110 to determine normal and reflectance parameters/ information of the scene.

To that effect, luminous intensity is a magnitude characterizing the amount of light power emitted by a punctual light source within a solid angle of one steradian. The luminous intensity emitted by a surface element $dS'$, in a direction $\theta'$ can be characterized according to equation one (1), which follows:

$$dI_s = L_s \times \vec{dS'}.\vec{e}_r = L_s \times cos(\theta') \times dS' \tag{1}$$

In equation (1) above, $L_s$ is the luminance of a surface element. When the source is small enough and planar, surface element intensities can be summed, then the total intensity of the source in the direction $\theta'$ can be determined according to equation two (2), which follows:

$$I_s = L_s \times cos(\theta') \times \Delta S' \tag{2}$$

The luminous flux emitted in a solid angle $d\Omega$ by a source of light can be characterized according to equation three (3), which follows:

$$d\Phi = I_s.d\Omega \tag{3}$$

If $dS$ is characterized as a surface element intercepted by previous luminous flux, then the luminous flux $d\Omega$ can be characterized according to equation four (4), which follows:

$$d\Omega = \frac{dS \times cos(\theta)}{r^2} \tag{4}$$

In equation (4) above, $r$ is the distance separating the source element from the receptor element. Consequently the expression of the luminous flux emitted by the source and received by a surface element $dS$ can be characterized according to equation five (5), which follows:

$$d\Phi = L_s \times \frac{\Delta S' \times cos(\theta') \times dS \times cos(\theta)}{r^2} \tag{5}$$

Then the luminance of a point, $P$, of the scene as it is captured by the camera can be determined according to equation six (6), which follows:

$$L(\omega_c) = fr(\omega_i, \omega_c) \times \frac{d\Phi}{dS} = fr(\omega_i, \omega_c) \times I_s \times \frac{cos(\theta)}{r^2} \tag{6}$$

In equation (6) above, $fr$ is the bidirectional reflectance differential function (BRDF) of the surface, $\omega_i$ is the source direction and $\omega_c$ is the camera direction.

Let $p$ be one pixel of coordinates $(u,v)$ on the sensor (centered coordinates) of the camera. As such, a pixel can be projected onto the scene as a point, $P$, taking the camera as the center of the world coordinates $(X,Y,Z)$ accordig to equation seven (7), which follows:

$$\begin{pmatrix} P_X \\ P_Y \\ P_Z \end{pmatrix} = \begin{pmatrix} u.d(u,v)/f_x \\ v.d(u,v)/f_y \\ -d(u,v) \end{pmatrix} \tag{7}$$

In equation (7) above, $(f_x, f_y)$ are the camera focals and $d(u,v)$ is the value given by the depth sensor projected on the *rgb* camera. Given the position $l \Rightarrow$ of the source, the illumination of point $P$ can be characterized according to equation eight (8), which follows:

$$dE = \frac{d\Phi}{dS} = I_s \times \frac{cos(\theta)}{\|P-l\|^2} \tag{8}$$

Assuming that a surface in question is lambertian, the luminance of a point, P, can be determined according to equation nine (9), which follows:

$$L(\omega_c, P) = k_d \times dE = k_d(P) \times I_s \times \frac{cos(\theta)}{\|P-l\|^2} \tag{9}$$

In embodiments of the present priniciples a calibration/synchronization is made between the camera and the depth sensor. That is, in such embodiments the two images from the camera and the recordings performed by the depth sensor are recorded with a time sequential illumination and fixed aperture and exposure time. As such a pure flash image is recovered by subtracting the images recorded by the camera including the flash light source and the images recorded by the camera containing only ambient light, providing that the images are linear and do not contain any underexposed and/or saturated pixels. That is, in order to be sure that the combination of the two image pairs will result in a pure flash image, three caveats should be considered: (1) the two images must be taken with the same camera parameters (exposure time, aperture, focal length..) (2) the images have to be linear (3) the pixels color shall not be saturated or underexposed in the two images.

Because of such calibration/synchronization between the data/images of the depth sensor (i.e., raw depth map) and an image of the scene for which illumination is known (flash only image), the captured depth data can be projected on the captured *rgb* image. Using such information, a 3D point cloud representation of the scene can be extracted and used to determine a Normal map. Such surface normals are extracted using local depth differences. Unfortunately the depth provided by the depth sensor is quantified which means that local depth differences are piecewise constants and thus cannot be used to derive continuous fine normals. However, in accordanc ewith embodiments of the presnt principles, fine geometry information can be retrieved because of the luminance captured by the *rgb* camera. Indeed supposing that the surface is lambertian, as described above, the luminance (of a point $P$ of the scene) captured by the camera can be determined according to equation ten (10), which follows:

$$dL(\omega_c, P) = \frac{I_s}{\|P-l\|^2} \times k_d(P) \times cos(\theta) \tag{10}$$

In equation (10) above, $I_s$, $P$, $l$ are considered the source illumination and $k_d(P)$ is the diffusion coefficient of the lambertian surface. $k_d$ is evenly split on each channel {$r,g,b$} of the camera as {$kdr,kdg,kdb$}. Given Lambertian coefficients values for each point, $P$, a rough Normal map derived from depth data can be drastically improved by using luminance information captured by the camera in accordance with the present principles.

In an embodiment of the present priniciples, initially a rough normal map is determined using depth data recorded by the depth sensor and the flash only image captured by the camera. That is in one embodiment of the present principles, the flash only image is used to extract clusters (K-means clustering) which have the same lambertian diffuse coefficients. The rough normal map is then filtered and weighted depending on luminance to preserve geometry details. Subsequently, a reflectance map ($k_d$ coefficients for each point of the scene) is determined using the filtered normal map and the flash image. Then this reflectance map is filtered and weighted depending on chromaticity to preserve texture details. Once the reflectance map is filtered, the normal map is refined using a least square minimization. That is, the filtered normal map is refined using a shading least square minimization process comparing a resultant model to the flash only image. The above described steps can be repeated until convergence of both, the normal and reflection map (described in greater detail below).

More specifically, in one embodimentof the present principles, to determine a normal map using depth data, $P(u,v)$ is considered the projection on the 3D space of a point which coordinates on the camera image $(u,v)$. As such, depth variations $(\delta_x, \delta_y)$ can be computed according to equations ten (10) and eleven (11), which follow:

$$\delta_x = d(P(u+1,v)) - d(P(u-1,v)) \tag{11}$$

$$\delta_y = d(P(u,v+1)) - d(P(u,v-1)) \tag{12}$$

Using equations (11) and (12), the local normals can be estimated according to equations thirteen (13), fourteen (14) and fifteen(15), which follow:

$$T_x = {}^t\left( 2\times\frac{d(P)}{f_x} \quad 0 \quad -\delta_x \right) \tag{13}$$

$$T_y = {}^t\left( 0 \quad 2\times\frac{d(P)}{f_y} \quad -\delta_y \right) \tag{14}$$

$$N = T_x \wedge T_y \tag{15}$$

In the equations above, $T_x$ and $T_y$ are respectively the tangent to the surface in $X$ and $Y$.

As described above, because the depth data provided by the depth sensor is quantified, the normal map computed is mainly composed of $Z$ oriented normals. That is, because the depth map is constant piecewise, each pixel has the same depth as its neighborhood, and gives a normal equal to ${}^t(0\ 0\ 1)$. It is only when the real depth difference is higher than the quantification step of the depth device that the resulting normal is not ${}^t(0\ 0\ 1)$. Consequently, in accordance with the present principles, the determined normal map is filtered as described below.

In accordance with the present principles, to remove noise in the normal map, a bilateral filtering is used on the normal orientation which produces filtered normals. In addition, the luminance image obtained by the camera contains shading information. As such, in accordance with one embodiment of the present principles a bilateral filter's weight is dependent on luminance. The more the respective luminance of two pixels is similar, the higher the averaging weight will be. For two pixels at location $i$ and $j$, a weighting function, $\omega_{ij}$, of the present principles is based on luminace $L(i)$ and $L(j)$ according to equation sixteen (16), which follows:

$$\omega_{ij} = exp\left( -\frac{(L(i)-L(j))^2}{2\sigma_l^2} - \frac{\left\| N_i - N_j \right\|^2}{2\sigma_n^2} \right) \tag{16}$$

In equation (16) above, $N_i$ and $N_j$ are the normals at pixel $i$ and $j$.

Once the first rough estimation of the filtered normals is made as described above, the reflectance map can be estimated according to equation seventeen (17), which follows:

$$k_{di} = \frac{\|P - l\|^2}{I_s} \times \frac{I_i}{cos(\theta)} \qquad (17)$$

In equation (17) above, $I_i$ is the pixel value given by the flash image, $i \in \{r,g,b\}$ and $I_s$ is linked to the flash light source. As the reflectance map is computed using a rough depth map, it is also rough. However, in accordance with the present principles, the *rgb* image information is used to help improve the reflectance map, providing two common assumptions:

    1. if two points have the same normal, the difference between their pixel value is only due to albedo variation,
    2. the set of relfectance spectra in the image is sparse.

A fair estimator for albedo variations resides in the chromaticity, and according to the two assumptions above, that means that chromaticity variations imply albedo variations. Consequently the impact of normal aberrations on the reflectance map can be reduced by performing a neighborhood average on each reflectance coefficient. Therefore, in accordance with the present principles, each $k_d$, diffuse coefficient, of the reflectance map is replaced by a weighted average of $k_d$ coefficients from nearby pixels, the weighting dependent on chromaticity similarities. That is, the more chromaticity similarities there is between two pixels, which implies that their respective albedos are expected to be similar too, the higher the averaging weight will be.

In one embodiment of the present principles, for two pixels at locations $i$ and $j$, the weighting function, $\omega_{ij}$, is based on chromaticities $C(i)$ and $C(j)$ according to equation eighteen (18), which follows:

$$\omega_{ij} = \begin{cases} 0 & \text{if } \|C(i) - C(j)\| > t_c \\ exp\left(\frac{-\|C(i) - C(j)\|^2}{2\sigma_c^2}\right) \end{cases} \qquad (18)$$

In equation (18) above, $C(i) = I(i)/\|I(i)\|$.

In accordance with the present principles, based on the filtered reflectance map, the normal map is refined. In one embodiment, the refinement relies on the lambertian model and a least-square error like algorithm over the three channels of each pixel. Developing the dot product, equation (9) above, can be written according to equation nineteen (19), which follows:

$$I_i = \frac{I_s}{r^2} \times k_{di} \times (N_x \omega_x + N_y \omega_y + N_z \omega_z), \ i \in \{r, g, b\} \qquad (19)$$

Assuming the correct $k_d$ coefficients are used, the goal is to find the three components of the normal, $N$, that minimize $\xi$ over the three channels according to equation twenty (20), which follows:

$$\xi = \left(\sum_i \left(\frac{I_i \times r^2}{k_{di} \times I_s} - (N_x \omega_x + N_y \omega_y + N_z \omega_z)\right)\right)^2 \qquad (20)$$

The minimum error with respect to $(N_x, N_y, N_z)$ is then determined according to equations twenty-one (21), twenty-two (22) and twenty-three (23) which follow:

$$\frac{\partial \xi}{\partial N_x} = 0 \rightarrow N_x = \frac{\sum_i \frac{I_i \times r^2}{k_{di} \times I_s} - N_z \omega_z - N_y \omega_y}{3 \times w_x^2} \qquad (21)$$

$$\frac{\partial \xi}{\partial N_y} = 0 \rightarrow N_y = \frac{\sum_i \frac{I_i \times r^2}{k_{di} \times I_s} - N_x \omega_x - N_z \omega_z}{3 \times w_y^2} \quad (22)$$

$$\frac{\partial \xi}{\partial N_z} = 0 \rightarrow N_z = \frac{\sum_i \frac{I_i \times r^2}{k_{di} \times I_s} - N_x \omega_x - N_y \omega_y}{3 \times w_z^2} \quad (23)$$

Each normal $N = {}^t(N_x\, N_y\, N_z)$ is initialized according to the normal map computed from depth data. Subsequently, each component is computed through an iterative scheme until convergence. For example, in one embodiment of the present principles, for each point there exists an initialized normal N corresponding to the previously filtered normal map and computed diffuse coefficients (reflectance map). The three (3) components of the normal, (Nx Ny Nz), are computed one after another. Once all three components have been updated the computation is started again. This iterative process is repeated until convergence of the normal map and diffuse coefficients (reflectance map).

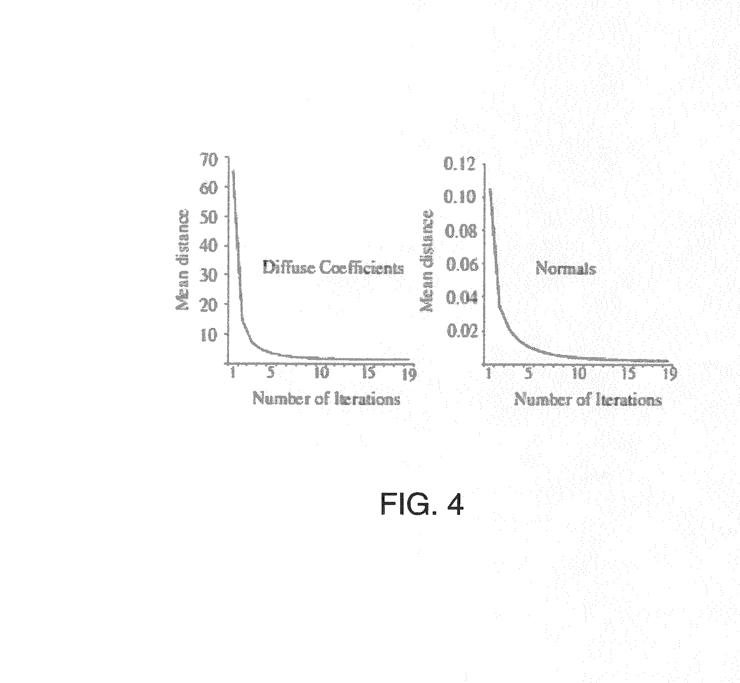

FIG. 4 depicts a graphical representation of the convergence of curves of normal and diffuse coefficients over each iteration of the above described process of the present principles in accordance with an embodiment of the present principles. As depicted in FIG. 4, in an experiment in which $\sigma_t = 0.001$, $\sigma_n = 0.02$ and $\sigma_m = 0.0005$, it is demonstrated that in the embodiment of FIG. 4, only a few iterations are necessary to reach a converged state. In the embodiment of FIG. 4, it appears that only 4-5 iterations are necessary to reach a high quality result of Normal Map and diffuse coefficient convergence.

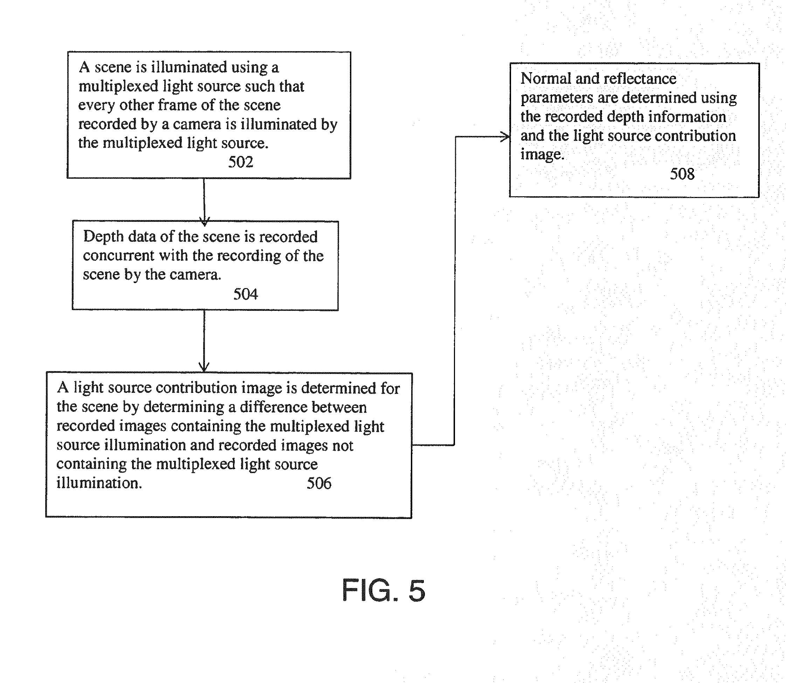

FIG. 5 depicts a flow diagram of a method for determining normal and reflectance parameters using sequential illumination and depth information in accordance with an embodiment of the present principles. The method 500 begins at step during which a scene is illuminated using a multiplexed light source such that every other frame of the scene recorded by a camera is illuminated by the multiplexed light source. The method 500 can then proceed to step 504.

At step 504, depth data of the scene is recorded concurrent with the recording of the scene by the camera. The method 400 can then proceed to step 506.

At step 506, a light source contribution image is determined for the scene by determining a difference between recorded images containing the multiplexed light source illumination and recorded images not containing the multiplexed light source illumination. The method 500 can then proceed to step 508.

At step 508, normal and reflectance parameters are determined using the recorded depth information and the light source contribution image. As described above, in one embodiment of the present principles the normal and reflectance parameters are determined by deriving a rough normal map using the recorded depth information and information derived from the light source contribution image, filtering the rough normal map using weighting based on luminance values derived from the captured images illuminated by the multiplexed light source, determining a reflectance map using the filtered normal map, filtering the reflectance map using weighting based on chromaticity values derived from the captured images illuminated by the multiplexed light source and refining the filtered normal map using information in the filtered reflectance map (diffuse coefficients) as described above. The method 500 can then be exited.

Optionally, in alternate embodiments of the present principles, the method 500 can further include an iterative process which includes filtering the refined, filtered, normal map using luminance components of the flash only image. The newly filtered normal map is used to determine a new reflectance map. The new reflectance map is again filtered using weighting based on chromaticity values derived from the captured images illuminated by the multiplexed light source. The filtered new normal map is then refined using the information in the filtered, new reflectance map. The process can then be repeated until the refined normal map and the refined reflectance map (diffuse coefficients) converge.

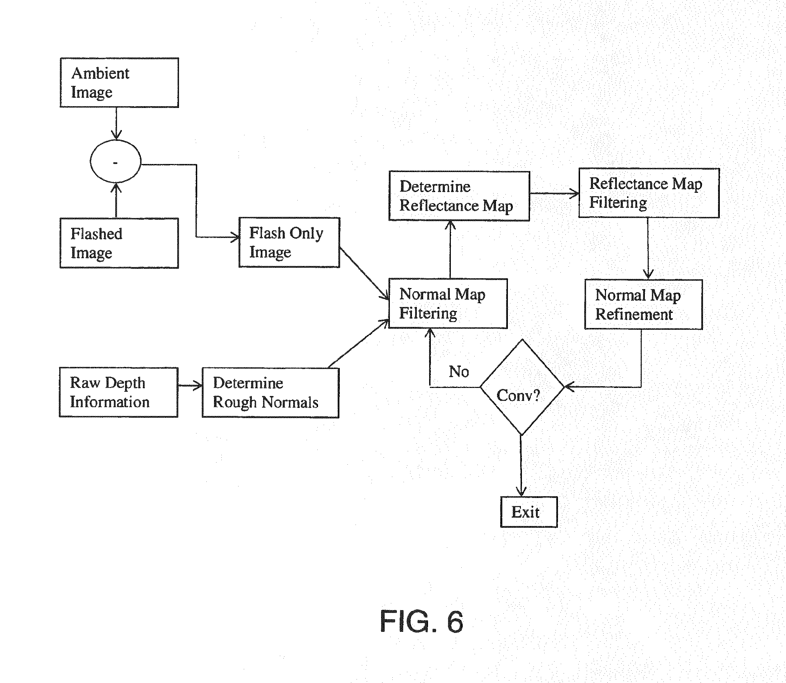

FIG. 6 depicts a graphical flow diagram a method for determining normal and reflectance parameters using sequential illumination and depth information including an iterative process in accordance with an embodiment of the present principles. As depicted in FIG. 6, a light source contribution image is determined by determining a difference between recorded images containing the multiplexed light source illumination and recorded images not containing the multiplexed light source illumination (ambient light only image). In addition, a rough normal map is determined as described above. The normal map is filtered as described above. The filtered normal map is then used to determine a reflectance map (e.g., diffuse coefficients). The reflectance map is then filtered as described above. The filtered reflectance map is then used to refine the filtered normal map as described above. As described above, the process can be repeated until the reflectance map and normal map converge. That is, as depicted in FIG. 6, after the refinement of the filtered normal map, it is determined if there is convergence between the reflectance map and normal map. If not, the process returns to the step of once again filtering the normal map as described above and specifically using the normal values of the refined normal map. The process can then continue as described above until convergence of the reflectance map and normal map as described above.

Having described various embodiments for a method, apparatus and system for the determination of normal and reflectance parameters using sequential illumination and depth information (which are intended to be illustrative and not limiting), it is noted that modifications and variations can be made by persons skilled in the art in light of the above teachings. It is therefore to be understood that changes may be made in the particular embodiments of the invention disclosed which are within the scope of the invention. While the forgoing is directed to various embodiments of the present invention, other and further embodiments of the invention may be devised without departing from the basic scope thereof.

**Claims**

1.    A method for determining normal and reflectance parameters using sequential illumination, comprising:

   illuminating a scene using a multiplexed light source such that every other frame of the scene recorded by a camera is illuminated by the multiplexed light source;
   recording depth data of the scene concurrent with the recording of the scene by the camera;
   determining a light source contribution image for the scene by determining a difference between recorded images containing the multiplexed light source illumination and recorded images not containing the multiplexed light source illumination; and
   determining normal and reflectance parameters using the recorded depth information and the light source contribution image.

2.    The method of claim 1, wherein determining normal and reflectance parameters comprises:

   deriving a rough normal map using the recorded depth information and information derived from the light source contribution image;
   filtering the rough normal map using weighting based on luminance values derived from the light source contribution image;
   determining a reflectance map using the filtered normal map;
   filtering the reflectance map using weighting based on chromaticity values derived from the light source contribution image; and
   refining the filtered, rough normal map using information in the filtered reflectance map.

3.    The method of claim 2, further comprising:

   filtering the refined, filtered, rough normal map to determine a newly filtered normal map;
   determining a new reflectance map using the newly filtered normal map;
   filtering the new reflectance map using weighting based on chrominance values derived from the light source contribution image; and
   performing a subsequent refining of the refined normal map using information in the filtered, refined reflectance map.

4.    The method of claim 3, comprising:

   repeating the steps of claim 3 until a reflectance map and a normal map converge.

5.    The method of claim 2, wherein the rough normal map is filtered using bilateral filtering.

6.    The method of claim 2, wherein the filtered, normal map is refined using a lambertian model and a least-square error like algorithm.

7.    An apparatus for determining normal and reflectance parameters using sequential illumination, comprising:

   a memory adapted to store control programs, instructions, software, video content, data and the like; and
   a processor adapted to execute the control programs and instructions, said processor when executing said control programs causing said apparatus to:

determine a light source contribution image for a scene by determining a difference between recorded images containing a light source illumination and recorded images not containing the light source illumination; and

determine normal and reflectance parameters using recorded depth information of a scene and the light source contribution image.

**8.** The apparatus of claim 7, wherein determining normal and reflectance parameters comprises:

deriving a rough normal map using the recorded depth information and information derived from the light source contribution image;

filtering the rough normal map using weighting based on luminance values derived from the light source contribution image;

determining a reflectance map using the filtered normal map;

filtering the reflectance map using weighting based on chromaticity values derived from the light source contribution image; and

refining the filtered, rough normal map using information in the filtered reflectance map.

**9.** The apparatus of claim 7, wherein said apparatus is further adapted to:

filter the refined, filtered, rough normal map to determine a newly filtered normal map;

determine a new reflectance map using the newly filtered normal map;

filter the new reflectance map using weighting based on chrominance values derived from the light source contribution image; and

performing a subsequent refining of the refined normal map using information in the filtered, refined reflectance map.

**10.** The apparatus of claim 9, comprising:

repeating the steps of claim 9 until a reflectance map and a normal map converge.

**11.** A system for determining normal and reflectance parameters using sequential illumination, comprising:

a light source adapted to illuminate a scene such that every other frame of the scene recorded by a camera is illuminated by the light source;

a depth sensor adapted to record depth data of the scene concurrent with the recording of the scene by the camera;

a processing device comprising:

a memory adapted to store control programs, instructions, software, video content, data and the like; and

a processor adapted to execute the control programs and instructions, said processor when executing said control programs causing said apparatus to:

determine a light source contribution image for the scene by determining a difference between recorded images containing the light source illumination and recorded images not containing the light source illumination; and

determining normal and reflectance parameters using the recorded depth information and the light source contribution image.

**12.** The system of claim 11, comprising a synchronizer adapted to use pulses from the camera to trigger the illumination by the light source.

**13.** The system of claim 12, wherein said synchronizer is further adapted to synchronize the depth sensor with the camera.

**14.** The system of claim 11, wherein determining normal and reflectance parameters comprises:

deriving a rough normal map using the recorded depth information and information derived from the light source contribution image;

filtering the rough normal map using weighting based on luminance values derived from the light source contribution image;
determining a reflectance map using the filtered normal map;
filtering the reflectance map using weighting based on chromaticity values derived from the light source contribution image; and
refining the filtered, rough normal map using information in the filtered reflectance map.

15. The system of claim 14, wherein said system is further adapted to:

filter the refined, filtered, rough normal map to determine a newly filtered normal map;
determine a new reflectance map using the newly filtered normal map;
filter the new reflectance map using weighting based on chrominance values derived from the light source contribution image; and
performing a subsequent refining of the refined normal map using information in the filtered, refined reflectance map.

FIG. 1

125

Input/Output Circuitry 240

Memory 220

Support Circuitry 230

Processor 210

GPU 250

FIG. 2

3a

Normal camera rate

Normal camera sequence Lighting 1

Camera rate x2

Lighting 1    Lighting 2

Normal camera sequence Lighting 2

3b

3c

FIG. 3

FIG. 4

A scene is illuminated using a multiplexed light source such that every other frame of the scene recorded by a camera is illuminated by the multiplexed light source.
502

Depth data of the scene is recorded concurrent with the recording of the scene by the camera.
504

A light source contribution image is determined for the scene by determining a difference between recorded images containing the multiplexed light source illumination and recorded images not containing the multiplexed light source illumination.
506

Normal and reflectance parameters are determined using the recorded depth information and the light source contribution image.
508

FIG. 5

```
Ambient
Image
   |
   v
  (-) <------- Flash Only          Determine          Reflectance Map
   ^            Image              Reflectance Map --> Filtering
   |              |                      ^                  |
Flashed           |                      |                  |
Image             v                      |                  v
              Normal Map                 |            Normal Map
              Filtering ------------------            Refinement
                  ^                                        |
                  |                                        |
Raw Depth --> Determine        No                          |
Information   Rough Normals --------> Conv? <--------------
                                        |
                                        v
                                      Exit
```

FIG. 6

Europäisches
Patentamt

European
Patent Office

Office européen
des brevets

**EUROPEAN SEARCH REPORT**

Application Number

EP 15 30 6547

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2011/285822 A1 (DAI QIONGHAI [CN] ET AL) 24 November 2011 (2011-11-24)<br>* abstract; figures 1-5 *<br>* paragraph [0003] - paragraph [0035] *<br>* paragraph [0047] - paragraph [0085] *<br>----- | 1,7,<br>11-13<br>2-6,<br>8-10,14,<br>15 | INV.<br>G06T5/50<br>G06T7/00<br><br>ADD.<br>G06K9/20 |
| X<br><br><br><br>A | NAYAR S K: "Shape and Reflectance from Image Intensities",<br>19911118; 19911118 - 19911119,<br>18 November 1991 (1991-11-18), pages 81-98, XP010269649,<br>* the whole document *<br><br>----- | 1,7,11<br><br><br><br>2-6,<br>8-10,<br>12-15 | |
| A | US 2012/268571 A1 (DEBEVEC PAUL E [US] ET AL) 25 October 2012 (2012-10-25)<br>* abstract; figures 1,6 *<br>* paragraph [0015] - paragraph [0024] *<br>* paragraph [0041] - paragraph [0097] *<br>----- | 1-15 | |
| A | NAOKI MUKAWA ED - INSTITUTE OF ELECTRICAL AND ELECTRONICS ENGINEERS: "ESTIMATION OF SHAPE, REFLECTION COEFFICIENTS AND ILLUMINANT DIRECTION FROM IMAGE SEQUENCES",<br>PROCEEDINGS / THIRD INTERNATIONAL CONFERENCE ON COMPUTER VISION : DECEMBER 4 - 7, 1990, OSAKA, JAPAN; [PROCEEDINGS OF THE INTERNATIONAL CONFERENCE ON COMPUTER VISION], IEEE COMPUTER SOC. PRESS, LOS ALAMITOS, CALIF,<br>vol. CONF. 3, 4 December 1990 (1990-12-04), pages 507-512, XP000242646,<br>ISBN: 978-0-8186-2057-7<br>* the whole document *<br>----- | 1-15 | TECHNICAL FIELDS SEARCHED (IPC)<br><br>G06T<br>G06K |

-/--

The present search report has been drawn up for all claims

| Place of search | Date of completion of the search | Examiner |
|---|---|---|
| Munich | 29 March 2016 | Herter, Jochen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    & : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 15 30 6547

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WENGER A ET AL: "Performance Relighting and Reflectance Transformation with Time-Multiplexed Illumination", ACM TRANSACTIONS ON GRAPHICS (TOG), ACM, US, vol. 24, no. 3, July 2005 (2005-07), pages 756-764, XP007905623, ISSN: 0730-0301, DOI: 10.1145/1073204.1073258 * the whole document *  ----- | 1-15 | |

**TECHNICAL FIELDS SEARCHED (IPC)**

The present search report has been drawn up for all claims

| Place of search | Date of completion of the search | Examiner |
|---|---|---|
| Munich | 29 March 2016 | Herter, Jochen |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 30 6547

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2016

| Patent document cited in search report | | Publication date | Patent family member(s) | | Publication date |
|---|---|---|---|---|---|
| US 2011285822 | A1 | 24-11-2011 | CN | 101872491 A | 27-10-2010 |
| | | | US | 2011285822 A1 | 24-11-2011 |
| US 2012268571 | A1 | 25-10-2012 | NONE | | |

EPO FORM P0459

For more details about this annex : see Official Journal of the European Patent Office, No. 12/82